(19) Europäisches Patentamt
European Patent Office
Office européen des brevets

(11) **EP 3 387 693 B1**

(12) **FASCICULE DE BREVET EUROPEEN**

(45) Date de publication et mention
de la délivrance du brevet:
**04.08.2021 Bulletin 2021/31**

(21) Numéro de dépôt: **16825463.9**

(22) Date de dépôt: **09.12.2016**

(51) Int Cl.:
*H01M 8/043* (2016.01)     *H01M 8/04746* (2016.01)
*H01M 8/04828* (2016.01)     *H01M 8/04858* (2016.01)
*H01M 8/04089* (2016.01)

(86) Numéro de dépôt international:
**PCT/FR2016/053292**

(87) Numéro de publication internationale:
**WO 2017/098176 (15.06.2017 Gazette 2017/24)**

(54) **PROCEDE DE PILOTAGE DE PILE A COMBUSTIBLE**

VERFAHREN ZUR STEUERUNG EINER BRENNSTOFFZELLE

METHOD FOR CONTROLLING A FUEL CELL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.12.2015 FR 1562206**

(43) Date de publication de la demande:
**17.10.2018 Bulletin 2018/42**

(73) Titulaire: **Symbio**
**69200 Venissieux (FR)**

(72) Inventeurs:
• **BRAILLARD, Vincent**
**63040 Clermont-Ferrand Cedex 9 (FR)**
• **PAGANELLI, Gino**
**63040 Clermont-Ferrand Cedex 9 (FR)**

(74) Mandataire: **Lavoix**
**2, place d'Estienne d'Orves**
**75441 Paris Cedex 09 (FR)**

(56) Documents cités:
**EP-A1- 2 277 223     EP-A2- 2 017 916
US-A1- 2002 175 010     US-A1- 2015 105 952
US-A1- 2015 340 717**

## Description

DOMAINE DE L'INVENTION

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

De manière plus précise, la présente invention se rapporte au fonctionnement d'une pile à combustible lorsqu'elle est utilisée dans un véhicule, en combinaison avec une autre source d'énergie.

ETAT DE LA TECHNIQUE

On sait que les piles à combustibles permettent la production directe d'énergie électrique par une réaction électrochimique d'oxydoréduction à partir d'un gaz carburant et d'un gaz comburant, sans passer par une conversion en énergie mécanique. Cette technologie semble prometteuse notamment pour des applications automobiles.

Le point de fonctionnement d'une pile à combustible, en termes de puissance électrique délivrée, est normalement défini par la charge qui lui est appliquée. Ainsi, pour un fonctionnement correct d'un véhicule équipé d'une pile à combustible, il est utile que la pile, lors de son installation dans un système global d'alimentation, soit reliée à un convertisseur électronique permettant de faire varier l'impédance vue par la pile à combustible, et donc son point de fonctionnement. En effet, pour répondre à la demande de puissance du conducteur exprimée via la pédale d'accélération du véhicule, il est nécessaire de pouvoir adapter la puissance fournie par la pile, via une modification de son point de fonctionnement. On précise ici que lorsqu'on parle de « variation du point de fonctionnement », cela se transcrit par une variation de l'intensité du courant sortant de la pile à combustible : I PAC.

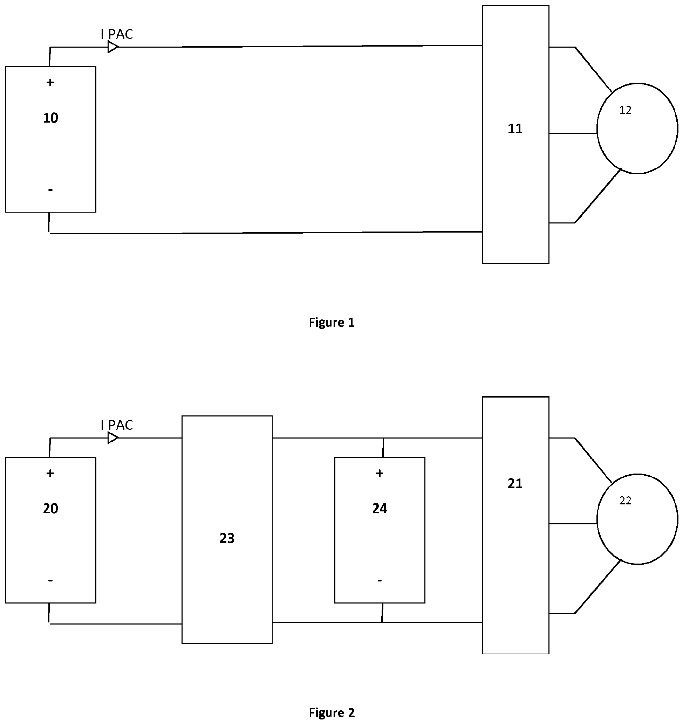

On connaît ainsi des architectures de véhicule dites « full H2 », c'est-à-dire sans stockage batterie, dont un exemple est montré en Figure 1. Dans cet exemple, un onduleur moteur 11 est installé entre la pile à combustible 10 et le moteur 12. Dans ce cas, c'est l'onduleur qui permet d'adapter l'impédance vue par la pile à combustible, et donc le point de fonctionnement I PAC.

On connaît également des architectures de véhicule électrique à batterie muni d'un prolongateur d'autonomie. La figure 2 illustre un exemple de telle architecture, dans laquelle le moteur 22 est alimenté primairement par une batterie 23. Un onduleur 21 est positionné entre la batterie 23 et le moteur 21. Ce véhicule est muni d'un prolongateur d'autonomie sous la forme d'une pile à combustible 20, qui permet un rechargement de la batterie 24 lorsque celle-ci est déchargée. Afin de définir le point de fonctionnement I PAC, on utilise un convertisseur de tension 23 électronique continu/continu, également appelé DC/DC, installé entre la pile à combustible 20 et la batterie 24.

Toutefois, cette architecture présente plusieurs inconvénients majeurs, puisque le convertisseur 23 est un composant cher, lourd, et encombrant. En outre, l'utilisation d'un tel convertisseur conduit à une perte de rendement, puisque le rendement classique d'un convertisseur est de l'ordre de 90% à 95%.

Il a donc été envisagé de supprimer ce convertisseur 23, ce qui conduit à un couplage direct en parallèle, de la pile 20 et de la batterie 24. Un tel couplage impose des contraintes sur l'appairage des tensions des deux générateurs de tension, puisque la pile à combustible et la batterie doivent présenter des plages de tension sensiblement identiques pour pouvoir être branchée directement en parallèle. Etant donné qu'une batterie présente une tension quasiment constante, c'est cette tension qui sera donc imposée de facto à la pile à combustible.

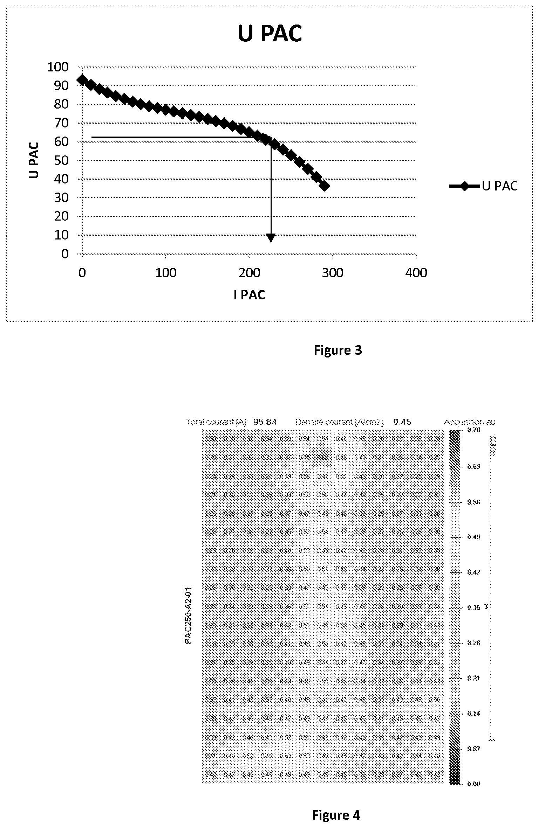

Une telle contrainte présente deux inconvénients importants. D'une part, la plage de variation de tension de la batterie, relativement faible, ne permet pas d'exploiter une large plage de variation du point de fonctionnement de la pile à combustible. En effet, la batterie présente une tension sensiblement constante, et de par le couplage direct elle impose sa tension à la pile à combustible. Il en résulte un courant délivré par la pile à combustible selon sa courbe de polarisation caractéristique. Dans l'exemple montré en figure 4, la batterie présente une tension de 62V. Selon la courbe de polarisation prise en exemple, le courant fourni par la pile à combustible sera de 220A. En pratique, en fonction des sollicitations du conducteur, la tension de la batterie varie, induisant donc également une variation du courant de la pile à combustible. Cependant cette variation de tension reste relativement faible et ne permet donc pas d'exploiter une large plage de variation du point de fonctionnement de la pile à combustible.

Le document US2015/0340717 décrit un procédé de pilotage de l'alimentation en air d'une pile à combustible équipant un véhicule permettant de fournir une quantité d'air supplémentaire à la pile lors d'une demande d'accélération. Le document US2015/0105952 décrit un procédé de pilotage de l'alimentation en air d'une pile à combustible équipant un véhicule afin de contrôler la quantité d'air fournie à la pile en fonction d'une demande d'accélération mais aussi en fonction de la puissance disponible à fournir au moteur. D'autre part, il s'avère impossible de réduire le courant délivré par la pile à combustible lorsque la demande de puissance du moteur est faible, ou que l'état de charge de la batterie ne permet pas de l'absorber.

La présente invention vise donc à proposer une solution permettant de remédier à ces deux inconvénients.

## BREVE DESCRIPTION DE L'INVENTION

Une pile à combustible est un empilement d'éléments unitaires qui, chacun, sont constitués essentiellement d'une anode et d'une cathode séparées par une membrane polymère permettant le passage de protons de l'anode à la cathode.

Cet empilement est installé dans un système comprenant un circuit d'alimentation en gaz carburant reliant un réservoir de gaz carburant à l'anode de la pile à combustible, et un circuit d'alimentation en gaz comburant reliant un réservoir de gaz comburant, ou l'air atmosphérique

L'anode alimentée en carburant, par exemple de l'hydrogène, est le siège d'une demi-réaction d'oxydation. Dans le même temps, la cathode alimentée en comburant, par exemple de l'oxygène pur ou contenu dans de l'air, est le siège d'une demi-réaction de réduction. Ce sont ces deux demi-réactions qui conduisent à la production d'eau et de courant.

Ainsi qu'indiqué précédemment, la présente invention vise à proposer une solution pour réduire le courant produit par la pile à combustible, lorsque la demande moteur est faible, ou lorsque l'état de charge d'une batterie reliée à la pile à combustible ne permet pas d'absorber le courant.

A cet effet, l'invention concerne un procédé de pilotage d'une pile à combustible à membrane électrolyte polymère selon la revendication 1.

De manière plus précise, la quantité d'oxygène introduite est réduite pour limiter le courant à la valeur souhaitée selon la relation stœchiométrique qui lie linéairement le courant produit et la quantité d'oxygène consommé pour une pile à combustible donnée. Par exemple pour une pile à combustible composée de 50 cellules, l'oxygène consommé à 100A est de 17.5 Standard Litre par Minute (SLPM). Donc théoriquement si l'on veut limiter le courant à 100A, on réduira la quantité d'air introduite à 83 SLPM (17.5SLPM/21%). En pratique, une partie de l'oxygène arrive à s'échapper de la pile sans réagir, il faut donc légèrement suralimenter par rapport au courant souhaité. De manière avantageuse dans un mode de réalisation de l'invention, on utilise un régulateur chargé d'asservir le débit d'air pour satisfaire une consigne de courant.

L'invention trouve une application dans des systèmes où la pile à combustible est en couplage direct avec un autre générateur de tension, en particulier une batterie.

De manière plus spécifique, l'invention trouve une application particulièrement avantageuse lorsque la pile à combustible est couplée à une charge régulée en tension et pas en courant. En effet, si la charge couplée à la pile à combustible est régulée en courant, elle aurait tendance à adapter son impédance pour maintenir un courant constant, ce qui conduirait à l'écroulement en tension de la cellule puisque il n'y aurait pas assez d'air pour soutenir ce courant. Dans ce mode de fonctionnement, il est donc préférable que la charge fonctionne en mode limitation de tension basse de façon à ne pas provoquer l'écroulement en tension de la pile à combustible.

L'invention est donc particulièrement indiquée lorsque la pile à combustible est couplée à un autre générateur de tension. Cela évite ainsi naturellement tout risque d'effondrement de tension encouru en cas de sous-alimentation en air.

On sait que l'oxygène consommé par une pile à combustible est rigoureusement proportionnel au courant produit, il est défini par la relation suivante :

$$\dot{m}_{o2} = \frac{MW_{o2} \cdot Nb\_cell}{n_{e^-} \cdot F} \cdot I_{FC}$$

$\dot{m}_{o2}$: Consommation d'oxygène [g/s]
$n_{e^-}$: Nombre d'électrons=2
$MW_{o2}$ : poids moléculaire de l'oxygène
Nb_cell : Nombre de cellules dans la pile
F : Constante de Faraday [96487 Coulombs/mol]
$I_{FC}$ : Courant dans la pile [A]

De manière préférentielle, dans un procédé selon l'invention, la pile à combustible est suralimentée en oxydant, c'est à dire que la cathode reçoit plus d'oxygène que nécessaire pour soutenir le courant délivré par la pile à combustible. Dans un exemple, cette suralimentation est caractérisée par un rapport stœchiométrique à la cathode réglé aux alentours de 2.

Une telle valeur permet de garantir une bonne homogénéisation du courant sur la surface active des cellules de la pile à combustible, tout en évitant une saturation de l'air en sortie de pile en eau produite par la pile à combustible.

En outre, on a constaté qu'un rapport stœchiométrique plus élevé n'est pas souhaitable car cela pourrait conduire à une consommation parasite pour l'alimentation en air, et à un assèchement des assemblages membranes-électrodes.

L'invention propose alors de sous-alimenter la pile à combustible en air lorsqu'il est nécessaire de réduire le courant produit par la pile. Pour ce faire, on diminue l'alimentation en oxydant de la pile. En effet, lorsqu'il n'y a plus assez d'oxydant pour soutenir le niveau de courant produit par la pile, ce dernier diminue jusqu'à atteindre le niveau correspondant à la quantité d'oxydant fournie. On précise ici qu'il est également possible d'annuler totalement le courant produit par la pile à combustible si le débit d'air entrant est complètement interrompu.

La nécessité de réduire le courant produit par la pile apparaît notamment dans le cas où la pile à combustible est liée à une batterie, par exemple dans une utilisation de la pile comme prolongateur d'autonomie d'un système alimenté par la batterie. Dans ce cas, la détection de la nécessité de réduire le courant est effectuée sur la base d'une estimation de la charge de la batterie.

Dans un autre exemple, il peut être nécessaire de réduire le courant si un moteur alimenté par la pile à combustible, directement ou indirectement, demande une faible puissance. Dans ce cas, la détection est effectuée à partir d'une mesure du courant bus.

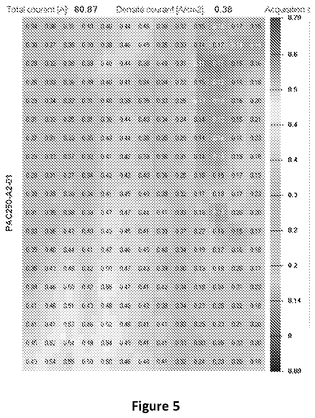

Par ailleurs, on a constaté, lors de la mise en œuvre d'un procédé de pilotage conforme à l'invention, qu'une sous-alimentation en air de la pile à combustible conduit à une sursaturation en humidité de l'air sortant de la pile, puisque la quantité d'air n'est plus suffisante pour éviter la condensation de l'eau produite. Ceci risque de conduire à des phénomènes de noyage de la pile à combustible, et donc à des dysfonctionnements ou à une dégradation de la pile. En outre la sous-alimentation en oxydant peut provoquer un clivage de la surface active en deux zones, une zone proche de l'entrée d'air produisant le courant et une zone privée d'oxygène et ne produisant plus de courant, voir figure 5 décrite plus loin. Dans ce cas la zone privée d'oxygène à la cathode mais encore alimentée en hydrogène à l'anode, peut se comporter en pompe à protons, c'est-à-dire qu'elle va se transformer en consommateur de courant pour la zone encore active, courant qui va être utilisé pour pomper de l'hydrogène de l'anode vers la cathode à travers la membrane échangeuse de proton. Ce processus est également connu pour la compression d'hydrogène de façon électrochimique. Dans notre cas, il s'agirait d'une réaction qui induirait une consommation parasite de courant et également d'hydrogène. De surcroit l'hydrogène pompé de l'anode vers la cathode est susceptible de réagir avec l'oxygène résiduel, et de produire un échauffement par combustion engendrant un risque de dégradation des cellules de la pile à combustible. Cependant, cette dernière réaction est peu probable car cette zone est justement très appauvrie en oxygène.

Il apparaît donc utile, dans un mode de réalisation préférentiel, de limiter la sous-alimentation à des périodes ponctuelles.

A cet effet, dans un exemple, un procédé selon l'invention comprend l'étape de réalimenter la pile aux conditions stœchiométriques normales lorsque le courant pouvant être absorbé par la batterie ou d'autres consommateurs reliés à ses bornes devient supérieur à un second seuil. Ce second seuil est préférentiellement au moins égal au courant produit par la pile aux conditions stœchiométriques normales, de façon à éviter un basculement répété ou instable, entre le fonctionnement normale et le fonctionnement en limitation de courant.

Afin d'éviter le clivage de la zone active, on effectue une recirculation de gaz cathodique, afin de diluer l'oxygène résiduel de façon homogène au sein de la cathode et favoriser une distribution du courant produit sur toute la surface active. La recirculation peut être réalisée au moyen d'une pompe prélevant le gaz en sortie cathode pour le réintroduire en entrée. Avec cette disposition il est possible de prolonger le fonctionnement en limitation de courant sur une durée supérieure à plusieurs minutes, voire de façon continue.

Dans un autre exemple, un procédé selon l'invention comprend l'étape d'éteindre la pile à combustible et de l'isoler électriquement au moyen de contacteurs dans le cas où le besoin de réduire le courant fournit se prolonge par exemple plus de 60 secondes.

Il est à noter que l'invention peut être avantageusement mise en œuvre dans un véhicule électrique pendant les phases de freinage récupératif, dans le cas où les batteries seraient trop chargées pour accepter l'addition du courant produit par la pile à combustible et du courant provenant du moteur de traction fonctionnant en générateur.

L'invention concerne également un système à pile à combustible à membrane électrolyte polymère comprenant un circuit d'alimentation en gaz carburant reliant un réservoir de gaz carburant à l'anode de la pile à combustible, et un circuit d'alimentation en gaz comburant reliant un réservoir de gaz comburant, ou l'air atmosphérique, et comprenant des moyens de pilotage permettant la mise en œuvre d'un procédé selon l'invention.

L'invention concerne également un véhicule comprenant un système selon l'invention, et comprenant en outre un générateur de tension couplé à la pile à combustible.

BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :

- Les figures 1, 2 déjà décrites, montrent des architectures de véhicules électriques,

- La figure 3, déjà décrite, montre la courbe de polarisation d'une pile à combustible, représentant le courant de la pile en fonction de la tension,

- La figure 4 montre la cartographie du courant produit par une cellule lors d'une suralimentation en oxygène de 1.8,

- La figure 5 montre cartographie du courant produit par une cellule lors d'une sous-alimentation en oxygène.

DESCRIPTION DU MEILLEUR MODE DE REALISATION DE L'INVENTION

La figure 4 représente la cartographie du courant mesuré sur la surface active d'une cellule de pile à combustible de 200cm2 au moyen d'un capteur spécialement développé. Ici la cellule de pile à combustible produit un courant de 95A et est alimentée avec un débit d'air de 3 Litres Standard par minute (SLPM). Selon la relation précédemment décrite au paragraphe [0021], cela correspondant à une suralimentation en oxygène de 1.8. On observe que la totalité de la surface active de la cellule contribue à produire du courant, même si l'homogénéité n'est pas parfaite.

La figure 5 représente la cartographie du courant produit par la cellule de l'exemple précédent lorsque le débit d'air est réduit à 1.45 SLPM. Ce débit d'air ne permet pas d'amener la quantité d'oxygène suffisante pour soutenir le courant préalablement établi à 95A. Le courant se réduit donc naturellement à 80A, ce qui correspond, selon la relation ci-dessus, au courant permettant une consommation pratiquement totale de l'oxygène apporté.

On observe une très forte inhomogénéité dans la cartographie du courant. En effet, dans la cellule testée, l'air est entré par le coin supérieur gauche et est distribué sur la surface de la cellule par des canaux en serpentin pour ressortir par le coin inférieur droit. A mesure de son déplacement le long des canaux en serpentin, l'air est appauvri en oxygène pour finir par approcher une concentration nulle en oxygène à la fin des canaux. C'est la raison pour laquelle la zone droite de la cellule, correspondant à la fin des canaux, ne produit quasiment pas de courant.

On constate alors à l'aide de ces deux figures que la quantité d'air fourni par la pile à combustible a une influence directe sur le courant produit, ce qui permet à un procédé selon l'invention de piloter efficacement le courant produit par la pile à combustible.

**Revendications**

1.  Procédé de pilotage d'une pile à combustible à membrane électrolyte polymère, la pile à combustible étant installée dans un système comprenant un circuit d'alimentation en gaz carburant reliant un réservoir de gaz carburant à l'anode de la pile à combustible, et un circuit d'alimentation en gaz comburant reliant un réservoir de gaz comburant, ou l'air atmosphérique, à la cathode et dans lequel la pile à combustible est en couplage direct avec un autre générateur de tension, le procédé comprenant les étapes suivantes :

    • on alimente la pile à combustible en gaz comburant,
    • on détecte que le courant produit par la pile est supérieur à un premier seuil déterminé en fonction du système dans lequel est installée la pile à combustible, et
    • on diminue l'alimentation en gaz comburant de la pile à combustible afin de diminuer le courant produit et
    • on effectue une recirculation de gaz cathodique, en prélevant du gaz en sortie de cathode et en le réinjectant en entrée.

2.  Procédé de pilotage selon la revendication 1, le procédé étant mis en œuvre dans un système comportant en outre une batterie reliée à la pile à combustible, et dans lequel la détection est effectuée à partir de l'estimation de la charge de la batterie.

3.  Procédé de pilotage selon la revendication 1, le procédé étant mis en œuvre dans un système comportant en outre une batterie reliée à la pile à combustible, et dans lequel la détection est effectuée à partir d'une mesure du courant bus.

4.  Procédé selon l'une des revendications précédentes, comprenant en outre l'étape de réalimenter la pile aux conditions stœchiométriques normales lorsque le courant pouvant être absorbé par la batterie ou d'autres consommateurs reliés à ses bornes devient supérieur à un second seuil.

5.  Procédé selon l'une des revendications 1 à 4, comprenant en outre 1 'étape d'éteindre la pile après une durée prédéterminée de sous-alimentation.

6.  Système à pile à combustible à membrane électrolyte polymère comprenant un circuit d'alimentation en gaz carburant reliant un réservoir de gaz carburant à l'anode de la pile à combustible, un circuit d'alimentation en gaz comburant reliant un réservoir de gaz comburant, ou l'air atmosphérique, à la cathode, et une pompe de recirculation installée dans le circuit d'alimentation en gaz comburant, la pile à combustible étant en couplage direct avec un autre générateur de tension, et comprenant des moyens de pilotage permettant la mise en œuvre d'un procédé selon l'une des revendications 1 à 4.

7.  Système à pile à combustible selon la revendication 6, comprenant en outre un régulateur installé dans le circuit d'alimentation en gaz comburant, permettant d'asservir le débit de gaz comburant.

8.  Véhicule comprenant un système à pile à combustible selon l'une des revendications 6 ou 7.

**Patentansprüche**

1.  Verfahren zum Steuern einer Polymerelektrolytmembran-Brennstoffzelle, wobei die Brennstoffzelle in einem System installiert ist, das einen Brennstoffgas-Zufuhrkreis, der ein Brennstoffgasreservoir mit der Anode der Brennstoffzelle verbindet, und einen Sauerstoffträgergas-Zufuhrkreis umfasst, der ein Sauerstoffträgergasreservoir oder atmosphärische Luft mit der Kathode verbindet, und wobei die Brennstoffzelle in direkter Kopplung mit einem anderen Spannungsgenerator ist, wobei das Verfahren die folgenden Schritte umfasst:

• Versorgen der Brennstoffzelle mit Sauerstoffträgergas,
• Erfassen, dass der von der Zelle erzeugte Strom größer ist als ein erster Schwellenwert, der abhängig von dem System, in dem die Brennstoffzelle installiert ist, festgelegt ist, und
• Verringern der Zufuhr von Sauerstoffträgergas zur Brennstoffzelle, um den erzeugten Strom zu verringern und
• Durchführen einer Kathodengasrückführung, indem Gas an dem Kathodenauslass entnommen und in den Einlass wieder eingespeist wird.

2. Steuerverfahren nach Anspruch 1, wobei das Verfahren in einem System durchgeführt wird, das außerdem eine mit der Brennstoffzelle verbundene Batterie umfasst, und bei dem die Erfassung anhand der Schätzung der Batterieladung durchgeführt wird.

3. Steuerverfahren nach Anspruch 1, wobei das Verfahren in einem System durchgeführt wird, das außerdem eine mit der Brennstoffzelle verbundene Batterie umfasst, und wobei die Erfassung anhand einer Messung des Busstroms ausgeführt wird.

4. Verfahren nach einem der vorhergehenden Ansprüche, außerdem den Schritt des Wiederversorgens der Zelle auf normale stöchiometrische Bedingungen umfassend, wenn der Strom, der von der Batterie oder anderen an ihren Klemmen angeschlossenen Verbrauchern entnommen werden kann, größer als ein zweiter Schwellenwert wird.

5. Verfahren nach einem der Ansprüche 1 bis 4, außerdem den Schritt des Abschaltens der Zelle nach einer vorbestimmten Zeitspanne der Unterversorgung umfassend.

6. Polymerelektrolytmembran-Brennstoffzellensystem mit einem Brennstoffgas-Zufuhrkreis, der ein Brennstoffgasreservoir mit der Anode der Brennstoffzelle verbindet, einem Sauerstoffträgergas-Zufuhrkreis, der ein Sauerstoffträgergasreservoir oder atmosphärische Luft mit der Kathode verbindet, und einer im Sauerstoffträgergas-Zufuhrkreis installierten Umwälzpumpe, wobei die Brennstoffzelle in direkter Kopplung mit einem weiteren Spannungsgenerator ist, und mit Steuermitteln, die die Durchführung eines Verfahrens nach einem der Ansprüche 1 bis 4 ermöglichen.

7. Brennstoffzellensystem nach Anspruch 6, das außerdem einen im Sauerstoffträgergas-Zufuhrkreis installierten Regler zum Regeln des Durchsatzes des Sauerstoffträgergases umfasst.

8. Fahrzeug mit einem Brennstoffzellensystem nach einem der Ansprüche 6 oder 7.

**Claims**

1. Method for controlling a polymer electrolyte membrane fuel cell, the fuel cell being installed in a system comprising a fuel gas supply circuit linking a fuel gas reservoir to the anode of the fuel cell, and an oxidant gas supply circuit linking an oxidant gas reservoir, or atmospheric air, the method comprising the following steps:

   • supplying the fuel cell with oxidant gas,
   • detecting that the current produced by the cell is greater than a first threshold determined on the basis of the system in which the fuel cell is installed,
   • reducing the supply of oxidant gas to the fuel cell in order to reduce the current that is produced, and
   • recirculating cathodic gas by drawing gas at the cathode outlet and reinjecting it at the inlet.

2. Control method according to Claim 1, the method being implemented in a system furthermore including a battery linked to the fuel cell, and wherein the detection is performed on the basis of the estimation of the charge of the battery.

3. Control method according to Claim 1, the method being implemented in a system furthermore including a battery linked to the fuel cell, and wherein the detection is performed on the basis of a measurement of the bus current.

4. Method according to one of the preceding claims, furthermore comprising the step of resupplying the cell under normal stoichiometric conditions when the current able to be absorbed by the battery or other consumers linked to its terminals becomes greater than a second threshold.

5. Method according to one of Claims 1 to 4, furthermore comprising the step of turning off the cell after a predetermined period of undersupplying.

6. Polymer electrolyte membrane fuel cell system comprising a fuel gas supply circuit linking a fuel gas reservoir to the anode of the fuel cell, an oxidant gas supply circuit linking an oxidant gas reservoir, or atmospheric air, and a recirculation pump installed in the oxidant gas supply circuit, the fuel cell being directly coupled to a voltage generator, and comprising control means that make it possible to implement a method according to one of Claims 1 to 4.

7. Fuel cell system according to Claim 6, furthermore comprising a controller installed in the oxidant gas supply circuit, making it possible to control the oxidant gas flow rate.

8. Vehicle comprising a fuel cell system according to one of Claims 6 or 7.

**I PAC**

| + |
|---|
| **10** |
| - |

**11**

12

**Figure 1**

**I PAC**

| + |
|---|
| **20** |
| - |

**23**

| + |
|---|
| **24** |
| - |

**21**

22

**Figure 2**

# U PAC

Figure 3

Figure 4

**Figure 5**

**RÉFÉRENCES CITÉES DANS LA DESCRIPTION**

**Documents brevets cités dans la description**

- US 20150340717 A
- US 20150105952 A